# EUROPEAN PATENT APPLICATION

(11) **EP 2 428 357 A1**
(43) Date of publication of application: **14.03.2012**
(21) Application number: 09844304.7
(22) Date of filing: 06.05.2009
(51) Int. Cl.: B32B 15/08

(54) **METHOD FOR PRODUCING BIAXIALLY ORIENTED POLYPROPYLENE FILM FOR HOT LAMINATION WITHOUT A COATING PHASE**

(71) Applicant: Extrusion De Resinas Vinilicas, S.A., 50171 La Puebla de Alfindén-Zaragoza (ES)
(72) Inventor: JIMENEZ GUARDIA, Alfonso, E-50171 La Puebla de Alfindén Zaragoza (ES)
(74) Representative: Schäfer, Matthias W.
(86) International application number: PCT/ES2009/070145
(87) International publication number: WO 2010/128175

(57) **Abstract**

The present invention allows a simplification in the conventional, known method for manufacturing biaxially oriented polypropylene film by dispensing with the independent coating and secondary cutting processes, thereby reducing by-products and achieving an energy saving by combining layers in the initial processing stage thereof, in which at least one of the outer layers can be hot-laminated to paper or to another film. There is between 90% and 100% of an EBA (ethylene/-butyl acrylate) copolymer and/or an EMA (ethylene/-methyl acrylate) copolymer and/or an EEA (ethylene/-ethyl acrylate) copolymer and/or an EAA (ethylene/-acrylic acid) copolymer and/or an EVA (ethylene/-vinyl acetate) copolymer. The content thereof may also include between 0% and 10% of a slip additive and/or an antiblocking additive. Furthermore, the thickness thereof is between 5 and 10 microns. Alternatively, the intermediate layer may vary in terms of percentages with a polypropylene homopolymer, partially or totally hydrogenated petroleum resin and a slip and/or antistatic additive.

## Description

### Technical Field

The invention that is protected in this patent relates to the production of plastic film for hot lamination, paper or other films, either printed or unprinted.

### Prior Art

In the field of graphic arts lamination for paper and plastic-covered cardboard there are two conventional laminating procedures:

A first procedure that employs plastic film requiring the application of an adhesive by means of wet coatings (water-based, solvent-based or other types) followed by drying before being lamination to paper.

And a second procedure that requires a plastic film which bonds directly to the paper by means of heat. This laminating method affords the advantage of not requiring wet coatings (water-based, solvent-based or other types) or the aforesaid subsequent drying process.

At present in this second procedure, the manufacture of the film consists of the following processes: 1. Manufacture of biaxially-oriented polypropylene film on a polypropylene extrusion line, 2. Subsequent reprocessing on a separate coating line where a polymer, that aids bonding to the substrate, normally EVA (ethylene/-vinyl acetate) copolymer or similar is added, before, 3. cutting and 4. packing and sending to the customer.

In the laminating sector several manufacturing procedures are already known and used, however all of these present operational and functional drawbacks, in particular due to the use of compounds that are aggressive to the environment and due to increased energy consumption and the generation of disposable sub-products.

Already known as procedures are the European Patent EP10043151 of JAPAN POLYCHEM CORPORATION AND WADA CHEMICAL CORPORATION CO. LTD. (1999) for a hot-lamination film that is produced by co-extruding two polymers on a substrate formed by polypropylene, polyethylene, PVC and oriented and non-oriented polystyrene film. This co-extrusion on a substrate in order to add resins that will serve as an adhesive when heated, is a coating process that takes place after the manufacture of the film used as a substrate, and this is not necessary with the invention that is protected in this patent.

And the procedure described in patent US2008/0299362 of COSMO FILMS LTD. which refers to a hot-lamination film using a biaxially-oriented polypropylene film to which a coating of EVA or EAA is applied.

As in the previous case, this patent requires a coating process subsequent to the manufacture of the film used as the substrate, and this is not necessary with the invention that is protected in this patent.

Likewise patent PCTC/US2007/064037 WO/2007/109490 of GENERAL BINDING CORPORATION for a hot-lamination film, also requires a coating process following manufacture of the base film, and this is not necessary in the case of the invention that is protected in this patent.

All of these, as prior patents to the invention that is presented, which are based on highly diverse applications, uses or functions and as inventions involving functional and optional limitations, are hence, far removed from the device of the invention.

### Technical problem

The process of applying an adhesive via wet coating involves the emission of solvents and other pollutants to the atmosphere, with the environmental problems that this involves, as well as a greater overall power consumption given that the film has to be dried after the application of the adhesive.

To solve these environmental problems that are generated by a wet coating, currently plastic film that bonds directly to paper by heat is used.

The process for manufacturing this plastic film that bonds to paper directly by means of heat, requires the subsequent application of a layer of EVA or similar copolymer on a separate line, and this results in a high level of overall wastage, a high energy cost and involves a considerably complex process.

### Technical solution

The invention that is protected in this patent solves the technical problem of a subsequent separate line and the drawbacks associated with eliminating it, by means of the use of specific, selected polymers in the film made on a polypropylene extrusion line, with the consequent saving of raw material costs, reduction in waste, energy, labour, time, etc.

In particular, the technical solution offered by our invention lies in the fact that the film, in its initial processing stage, combines a set of layers in which at least one of the outer layers can be hot-laminated to paper or to another film, printed or not, and the other outer layer is transparent and glossy, in the case of gloss-type laminating film, or matt in the case of matt-type laminating film.

### Advantageous effects

This invention consists of three principal advantages: simplification of the conventional manufacturing system, reduction of waste and energy saving. The advantage of the simplification of the conventional manufacturing process consists of obviating the need for and eliminating the process of a separate coating and secondary cutters.

The advantage of reducing wastage or waste is two-fold given that this waste is not reusable on the polypropylene extrusion line, since the waste generated in coating processes and secondary cutters in conventional manufacturing is a sub-product of the manufacturing process, which cannot be reused on the polypropylene extrusion line itself due to the fact that it is considered to be industrial waste that must necessarily go to specialized industrials plants for its recovery or recycling.

The energy-saving advantage consists of a reduction in the specific production energy consumption per kilogram of the final film, by eliminating final production stages that consume energy.

### Description of figures

In order to gain a better understanding of the aforementioned general features, several drawings are included with the present invention, which show the following:

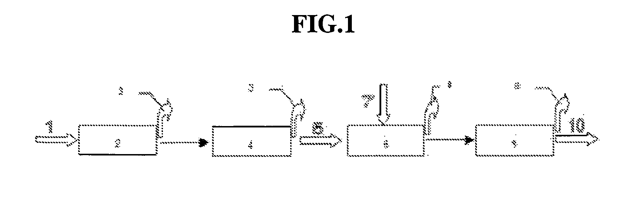

Figure 1 : Diagram of a conventional manufacturing process of plastic film for direct hot lamination, which includes a separate coating line after the polypropylene extrusion line, which comprises the in-feed of raw material (1) on a film production line (2) which gives rise to recoverable waste product (3) with its primary cutters that cut the manufactured film (4) that also gives rise to its corresponding recoverable waste product (3), resulting in the base film for the end product (5) which goes on to a coating line (6) in which it receives an adhesive product (7) where its corresponding non-recoverable waste product (8) also arises, with its secondary cutters that cut the processed and coated film (9), which also gives rise to its corresponding non-recoverable waste product (8) and the final output of the product ready to be packed and sent to the customer (10).

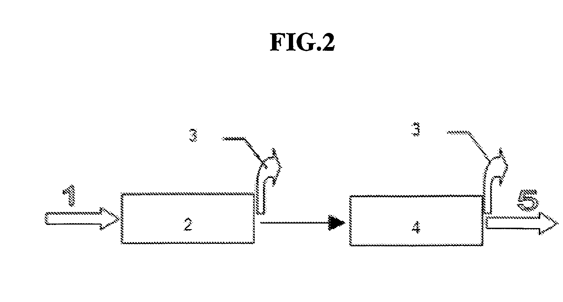

Figure 2: Diagram of the process of the invention of the manufacture of plastic film for direct hot lamination without subsequent separate coating line which contains: the in-feed of raw material (1) on a polypropylene extrusion line (2) which gives rise to a recoverable waste product (3), with its primary cutters that cut the processed film (4) which also gives rise to its corresponding recoverable waste product (3) and the final output of the product ready to be packed and sent to the customer (5)

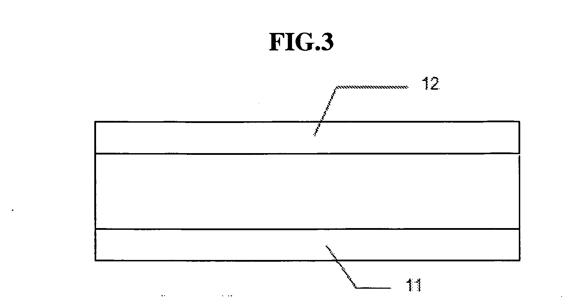

Figure 3: Sectional view of hot-lamination polypropylene film resulting in the object of the invention, with its layer for hot lamination to paper or other films, with graphic printing or not (11) and its gloss-finish and matt-finish layer (12). Between both layers (11) and (12) there is at least one intermediate layer.

### Embodiment of the invention

The procedure for producing polypropylene film for hot lamination without a coating phase can be carried out and arranged in the following way:

Raw material (1) is fed into a polypropylene extrusion line (2) which gives rise to a recoverable waste product (3), obtaining a bi-oriented film that goes to the primary cutters (4) that cut the process film, and where its corresponding recoverable waste product (3) also arises, finally, there is the output of the end product (5), ready to be packed and sent to the customer.

It is on the polypropylene film manufacturing line (2), in the extrusion system, where the structure of the film is formed, and the layer (11), which can be hot-laminated to paper or another film and the layer (12), which will give the film the gloss-effect or matt-effect finish are formulated.

With regard to the raw material used, this hot-lamination layer (11) is formed by between 90% and 100% of an EBA (ethyl-butyl-acrylate) copolymer, and/or an EMA (ethyl-methyl-acrylate) copolymer, and/or an EAA (ethylene acrylic acid) copolymer, and or an EVA (ethyl-vinyl-acetate) copolymer. If required it may also contain between 0% and 10% of a slip additive and/or an anti-blocking additive. And its thickness is between 5 and 10 microns.

One of the two outer layers of the final film (12) produces the aesthetic appearance of the film once hot-laminated to the paper or to another film, whether printed or not, with a gloss-effect or matt-effect finish.

The intermediate layer, or at least one of the intermediate layers of the polypropylene film, included between the hot-lamination layer (11) and the gloss or matt-finish layer (12) - FIGURE no. 3 - will consist of between 50% and 80% of polypropylene homopolymer, between 20% and 50% of partially or totally hydrogenated petroleum resin and between 0% and 10% of slip additive and/or an anti-static additive.

The applicant company's own R+D laboratory has carried out trials and tests aimed at obtaining a film that, in terms of bonding to the paper medium and appearance once laminated, is similar to the film currently used on the market, adapting it to the reduced industrial process that is described as the industry's target procedure.

In order to determine the validity, in terms of the adhesion of the different formulations to the medium or intermediate layer (11), the model used is that of 150 g/m2 virgin paper and 150 g/m2 printed paper with 6 different types of inks.

To adjust the different formulations, a series of tests, that are described below, have been performed:

### Test series no. 1

In this series of tests, the main polymer used in the hot-lamination layer (11) has been EBA. Different tests have been performed with percentages of EBA in said layer of between 90% and 100%, supplemented with between 10% and 0% of a slip additive and/or anti-blocking additive. Different tests have been performed varying the percentage of hydrogenated resin in the body between 20% and 50%, varying the slip additive and/or anti-static additive between 0% and 10% and polypropylene homopolymer to complete 100% of the body. The thickness of this layer (11) has also been varied between 5 and 10 microns.

Furthermore, film manufacturing tests have been performed by applying a top layer (12) with a gloss effect or matt effect.

### Test series no. 2

In this series of tests, the main polymer used in the hot-lamination layer (11) has been EMA. Different tests have been performed with percentages of EMA in said layer of between 90% and 100%, supplemented with between 10% and 0% of a slip additive and/or anti-blocking additive. Different tests have been performed, varying the percentage of hydrogenated resin in the body between 20% and 50% , varying the slip additive and/or anti-static additive between 0% and 10% and polypropylene homopolymer to complete 100% of the body. The thickness of this layer (11) has also been varied between 5 and 10 microns.

Furthermore, film manufacturing tests have been performed by applying a top layer (12) with a gloss effect or matt effect.

### Test series no. 3

In this series of tests, the main polymer used in the hot-lamination layer (11) has been EEA. Different tests have been performed with percentages of EEA in said layer of between 90% and 100%, supplemented with between 10% and 0% of a slip additive and/or anti-blocking additive. Different tests have been performed, varying the percentage of hydrogenated resin in the body between 20% and 50%, varying the slip additive and/or anti-static additive between 0% and 10% and polypropylene homopolymer to complete 100% of the body. The thickness of this layer (11) has also been varied between 5 and 10 microns.

Furthermore, film manufacturing tests have been performed by applying a top layer (12) with a gloss effect or matt effect.

### Test series no. 4

In this series of tests, the main polymer used in the hot-lamination layer (11) has been EAA. Different tests have been performed with percentages of EAA in said layer of between 90% and 100%, supplemented with between 10% and 0% of a slip additive and/or anti-blocking additive. Different tests have been performed, varying the percentage of hydrogenated resin in the body between 20% and 50%, varying the slip additive and/or anti-static additive between 0% and 10% and polypropylene homopolymer to complete 100% of the body. The thickness of this layer (11) has also been varied between 5 and 10 microns

Furthermore, film manufacturing tests have been performed by applying a top layer (12) with a gloss effect or matt effect.

### Test series no. 5

In this series of tests, the main polymer used in the hot-lamination layer (11) has been EVA. Different tests have been performed with percentages of EVA in said layer of between 90% and 100%, supplemented with between 10% and 0% of a slip additive and/or anti-blocking additive. Different tests have been performed, varying the percentage of hydrogenated resin in the body between 20% and 50%, varying the slip additive and/or anti-static additive between 0% and 10% and polypropylene homopolymer to complete 100% of the body. The thickness of this layer (11) has also been varied between 5 and 10 microns

Furthermore, film manufacturing tests have been performed applying a top layer (12) with a gloss effect or matt effect.

### Test series no. 6

In this last series of tests, different mixed combinations of between 90% and 100% of EBA, EMA, EEA, EAA and EVA have been used in the hot-lamination layer (11) supplemented with between 10% and 0% of a slip additive and/or anti-blocking additive. Different tests have been performed, varying the percentage of hydrogenated resin in the body between 20% and 50%, varying the slip additive and/or anti-static additive between 0% and 10% and polypropylene homopolymer to complete 100% of the body. The thickness of this layer (11) has also been varied between 5 and 10 microns.

Furthermore, film manufacturing tests have been performed applying a top layer (12) with a gloss effect or matt effect.

The results of the six series of tests appear below, presented jointly, comparatively and in a conclusive way:
- Bonding strength to printed paper and to virgin paper increases as the thickness of the hot- lamination layer (11) increases.
- The quality of final lamination increases when the amount of hydrogenated resin in the body is increased.
- The quality of final lamination increases when the thickness of the hot-lamination layer (11) is increased.
- The runnability of the film increases in proportion to the increase in the percentage of the anti-blocking additive and/or slip additive in the hot-lamination layer (11).
- All of the tests performed in the test series have obtained acceptable results with regard to degree of bonding and appearance of the laminated film both in gloss and matt.
- In test series no. 6, with the mixed combination, the results have been lower than in the previous five test series.
- Of the six test series, the best results for features and technical properties of the resulting product have been obtain in test series no. 5 with the incorporation of the EAA (ethylene-acrylic acid) copolymer.

## Claims

1. Procedure for producing biaxially-oriented polypropylene film for hot lamination without a coating phase, wherein the input of raw material (1) on a polypropylene film manufacturing line (2) and by means of a co-extrusion system, forms the structure of the film and formulates the layer (11) for hot-lamination to paper or another film and the layer (12) for a gloss or matt effect, which gives rise to a recoverable waste product (3), obtaining a biaxially-oriented film that goes to the primary cutters (4) which cut the processed film, where the corresponding recoverable waste product (3) also arises. Lastly, the final exit of the product (5), ready to be packed and sent to the customer, takes place.

2. Procedure for producing biaxially-oriented polypropylene film for hot lamination without a coating phase, according to claim 1, wherein the raw material used, this hot-lamination layer (11), consists of between 90% and 100% of an EBA (ethyl-butyl-acrylate) copolymer and/or an EMA (ethyl-methyl-acrylate) copolymer, and/or an EEA (ethylene-ethylacrylate) copolymer, an/or an EAA (ethylene-acrylic acid) copolymer, and/or an EVA (ethyl-vinyl-acetate) copolymer. Depending on the requirements it may also contain between 0% and 10% of a slip additive and/or anti-blocking additive. And its thickness is between 5 and 10 microns.

3. Procedure for producing biaxially-oriented polypropylene film for hot lamination without a coating phase, according to claim 1, wherein one or the two outer layers of the final film (12) produces the aesthetic appearance of the film once it is hot-laminated to paper or to another film, whether printed or not, with a gloss-effect or matt-effect finish. The intermediate layer or at least one of the intermediate layers of the final film, included between the hot-lamination layer (11) and the gloss or matt final film (12) will comprise between 50% and 80% of polypropylene homopolymer, between 20% and 50% partially or totally hydrogenated petroleum resin, and between 0% and 10% of a slip additive and/or an anti-static additive.
